**Europäisches Patentamt**

**(19) European Patent Office**

**Office européen des brevets**

(11) Publication number : **0 328 384 B1**

## (12) EUROPEAN PATENT SPECIFICATION

(45) Date of publication of patent specification :
**11.11.92 Bulletin 92/46**

(51) Int. Cl.5 : **G01B 17/02, G01B 11/24**

(21) Application number : **89301242.7**

(22) Date of filing : **09.02.89**

(54) Apparatus and method for inspecting a sidewall of a tyre.

(30) Priority : **12.02.88 JP 31374/88**

(43) Date of publication of application :
**16.08.89 Bulletin 89/33**

(45) Publication of the grant of the patent :
**11.11.92 Bulletin 92/46**

(84) Designated Contracting States :
**DE FR GB**

(56) References cited :
**DE-A- 2 022 083**
**GB-A- 2 072 346**
**US-A- 4 311 044**

(73) Proprietor : **SUMITOMO RUBBER INDUSTRIES LIMITED**
**No. 1-1, Tsutsui-cho 1-chome**
**Chuo-ku Kobe-shi Hyogo 651 (JP)**

(72) Inventor : **Teraguchi, Takashi**
**1-1-23, Hinokuchicho**
**Nishinomiya-shi Hyogo-ken (JP)**
Inventor : **Tanaka, Atsuhiko**
**7-40 Shimobayashicho**
**Toyota-shi Aichi-ken (JP)**

(74) Representative : **Stewart, Charles Geoffrey**
**SP TYRES UK LIMITED Tyre Technical Division**
**Fort Dunlop Birmingham B24 9QT (GB)**

EP 0 328 384 B1

## Description

This invention relates to an apparatus and method for inspecting a sidewall surface of a tyre to discriminate the quality of the tyre.

It is known that due to uneven intervals of ply cords, uneven overlapped amounts of ply joints and other causes that irregularities may arise on the sidewall surface of a tyre when the tyre is inflated. Such irregularities have a bad influence on the uniformity of the tyre and also mar the outer appearance and lower the marketability of the tyre. For these reasons, it is necessary to detect undesirable irregularities on the wide wall of a tyre in inspection operations.

However, in addition to the irregularities which it is required to detect, there are irregularities caused by lettering, codes, marks, spews, dirt and the like, on a tyre sidewall surface which must not be detected.

Accordingly, it can be seen that it is necessary to separate the signals generated by the irregularities it is not required to detect from those generated by irregularities it is required to detect.

A method and apparatus for inspecting the sidewall of a tyre using holographic interferometry to detect variations in the expansion of the tyre over a period of time is disclosed by Patent document DE-A-2022083.

A conventional apparatus for inspecting the irregularity of a sidewall surface is disclosed in Japanese Examined Patent Publication No 62-30361. The conventional apparatus which utilises an electrostatic capacity sensor can obtain no more than an average value for an area having a great circumferential length, for example, greater than 1mm. This is due to performance characteristics of the electrostatic capacity sensor and consequently provides insufficiently accurate inspection. Furthermore, in the conventional apparatus, to eliminate signals caused by irregularities unrequired to detect or to reduce the influence of irregularities unrequired to detect such as lettering, marks, codes, and spews the area detected by the electrostatic capacity sensor is set so as to have a long radial length and a short circumferential width. Thus, it can be seen that due to the performance characteristics of an electrostatic capacity sensor, it is in fact difficult for the conventional apparatus to separate signals caused by irregularities unrequired to detect from those caused by irregularities required to detect.

Consequently, it will be apparent that the inspection accuracy of the conventional apparatus is very low because of the fact that signals caused by such irregularities unrequired to detect as letterings, marks, codes, spews, and dirt on tyre sidewall surface are frequently mistaken by sensed as signals caused by detection required irregularities.

An apparatus having all the features of the preamble of claim 1 is disclosed in the published Patent document US-A-4311044.

Also the conventional apparatus which utilises a filter and the like is liable to generate detection signals having deformed waveforms and consequently this still further lowers the inspection accuracy.

It is an object of the present invention to overcome the above problems and provide an apparatus for inspecting a sidewall surface of a tyre which makes it possible to eliminate the influence of such irregularities unrequired to detect as lettering, marks, codes, spews, dirt and the like without deforming the waveform of the detection signal and so to accurately detect an abnormal irregularity which it is required to detect and assure an increased inspection accuracy.

Accordingly, the apparatus of the present invention comprises an apparatus for inspecting a sidewall of a tyre comprising a sensor provided so as to face a sidewall surface of a rotatably mounted tyre to generate an irregularity signal, memory means for storing the irregularity signal generated by the sensor, data discrimination means for discriminating whether or not the signal read out from the memory means is usable as irregularity inspection data, height calculation means for determining an irregularity falling within a predetermined condition and calculating the height of the irregularity, and determination means for determining, based on the height of the irregularity calculated by the height calculation means, whether there is an abnormal irregularity characterised in that the apparatus further comprises correction means for removing irregularities unrequired to detect from the data discriminated as usable data by the data discrimination means and the sensor is an optical sensor for reading a variation of distance to the sidewall surface as the irregularity signal.

The present invention preferably includes an optical sensor which is movable to and away from a sidewall surface of a tyre and setable at a suitable detection position as specified in advance in accordance with either the tyre type or size.

Furthermore, the present invention preferably includes an optical sensor having a spot diameter of 1.00mm or smaller, and signal sampling means for sampling a signal from the sensor in such an interval that successive detection areas do not overlap one another in the circumferential direction of the tyre, so that more accurate detection is obtained.

Furthermore, the present invention preferably includes correction means in which discrimination of an irregularity required to detect and an irregularity unrequired to detect is effected based on the width of the irregularity and whether the irregularity has a flat central portion or not.

According to the present invention. all the irregularities on a sidewall surface of a tyre are detected by the use of an optical sensor, and the detection signals is stored as inspection data, the inspection data is corrected to remove irregularities unrequired to detect, and an irregularity falling within a predetermined condition is determined, the height of the irregularity is calculated, and a final determination as to whether there is an abnormal irregularity is effected based on the calculated height of the irregularity. Consequently, the apparatus of the present invention assuredly eliminated the influence of lettering, marks, codes, and the like and then correctly detects irregularities required to detect. Thus, inspection accuracy is increased.

Also, since the optical sensor is set at the most suitable detection position, inspection accuracy is further increased.

Moreover, an apparatus of the present invention which has signal sampling means for sampling a signal of the sensor at such intervals that the detection areas do not overlap one another in the circumferential direction of the tyre can obtain accurate signals having no overlapped portions.

Furthermore, since the apparatus of the present invention preferably has a plurality of optical sensors facing a sidewall surface which are provided in the radial direction of the tyre at intervals so as to take over their respective portions of a detection zone at the same time, clearer discrimination of irregularities required to detect from irregularities unrequired to detect is obtainable and thus further increased inspection accuracy results.

Furthermore, since the apparatus of the present invention may have correction means for detecting the width of an irregularity and checking whether the irregularity has a flat centre portion so that an irregularity unrequired to detect is removed from the data discriminated as usable data by the data discrimination means, more accurate elimination of irregularities unrequired to detect is effectable.

Another aspect of the invention provides a method of testing the sidewalls of a tyre characterised by reading by an optical sensor a variation of the distance from the sensor to the sidewall surface as an irregularity signal, storing the irregularity signals in a memory means, determining whether or not the signal read from the memory means is usable as irregularity inspection data, removing irregularities unrequired to detect from the usable data, determining which data relate to an irregularity falling within a predetermined condition by calculating the height of the irregularity, determining based on said heights, whether there is an abnormal irregularity and if there is operating a warning device.

One embodiment will now be described by way of example only in conjunction with the attached diagrammatic drawings in which:

Figure 1 is a block diagram of an embodiment of the present invention;
Figure 2 is a diagram showing waveforms of a detection signal, (a) showing a waveform of the signal before corrected by correction means, (b), (c), (d) showing respective waveforms of the signal after corrected by correction means step by step;
Figure 3 is a flowchart showing operations of the embodiment;
Figure 4 is a schematic diagram of the embodiment specifically showing positions of sensors and construction of the supporting means for sensors;
Figure 5 is a sectional view showing a part of the embodiment;
Figure 6 is a diagram showing a bulge form difference, (a) showing an actual form of the bulge, (b) showing a waveform issued by a small spot diameter sensor detecting the bulge, and (c) showing a waveform issued by a large spot diameter sensor detecting the bulge; and
Figure 7 is a diagram showing a lettering form difference, (a) showing an actual form of the lettering, (b) showing a waveform issued by a small spot diameter sensor detecting the lettering, and (c) showing a waveform issued by a large spot diameter sensor detecting the lettering.

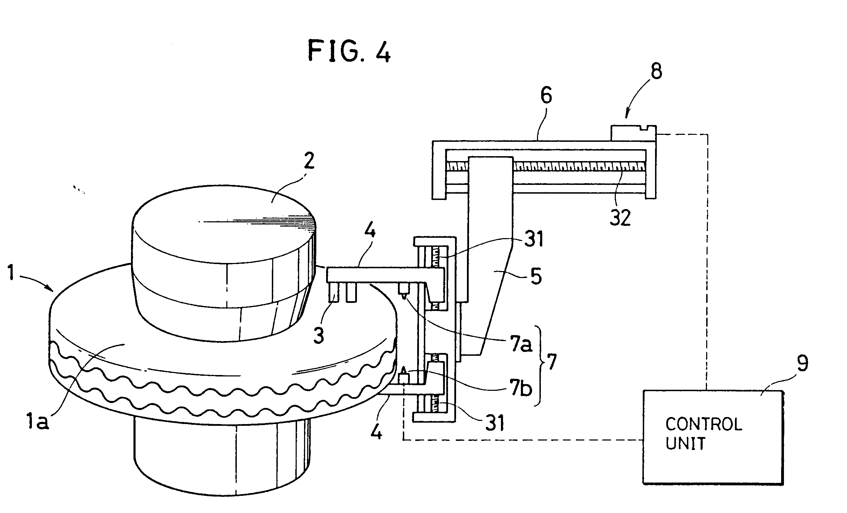

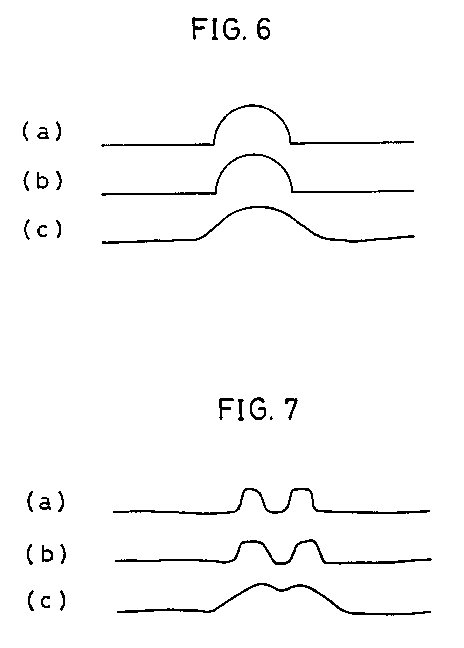

As shown in Figures 4 and 5 a tyre (1) having sidewalls (1a) and inflated with air is supported in a horizontal position by a support drum (2). The support drum (2) is rotatable by a driving mechanism not shown. Inspection of the irregularity of the sidewall surface (1a) is carried out while the tyre is rotated on the driven support drum (2).

Perpendicularly to the both sidewall surface (1a,1a) are respectively provided optical displacement sensors (3) (hereinafter referred to as sensors). Specifically, a plurality of sensors (3) in this case two sensors, are provided aligned in the radial direction of the tyre (1) and spaced at appropriate intervals. The sensor (3) is adopted for measuring the variation of the distance from the sensor (3) to the sidewall surface (1a) to detect irregularities. The sensors (3) are attached to a pair of arms (4,4) respectively. The arms (4,4) are mounted on a frame (5). Also, the arms (4,4) are independently movable in a vertical direction. The arms (4,4) are movable to adjust the vertical position of the sensor (3) with respect to the sidewall surface i.e. the distance between the sensor and the sidewall surface. The frame (5) is carried by a support member (6) and movable in a parallel direction to a radial direction of the tyre (1). The frame (5) is movable so as to allow adjustment of the radial position of its sensor (3).

Indicated at (31,32) are threaded shafts which are rotatable by a motor not shown in the drawings.

An emitter element (7a) and a receiver element (7b) are provided on base portions of the arms (4,4) respectively to constitute a position detector (7). In setting the sensor (3) at the most suitable detection positions P, when the sensor light of the position detector (7) is interrupted by the tyre (1) after the frame (5) is moved horizontally towards the tyre (1), it is determined that the sensors (3) reach the reference or sensing position.

However, it should be noted that the height of a tyre sidewall from the bead heel changes in accordance with tyre size, and accordingly the most suitable detection position P or the position at which irregularities are most liable to occur due to un even intervals of ply cords, uneven amounts of ply joint, or the like changes in accordance with tyre sizes. Also as shown in Figure 5, the distance L between the position detector (7) and a particular sensor (3) of the sensor group to be positioned at the most suitable detection position P is fixed. Accordingly, it is preferable to predetermine in accordance with the tyre size a delay stopping time which is a period between the time when the portion detector (7) beam is interrupted and the time when the particular sensor reaches the most suitable detection position P.

The position detector (7) sends a reference positional signal to a control unit (9) for controlling a frame driving mechanism (8). The movement of the frame (5) is controlled based on the reference positional signal and the delay stopping time in accordance with tyre size or the tyre diameter. For example, in the case of one tyre having a certain size, the frame (5) is stopped immediately after the position detector (7) detects the reference position. In the case of another tyre having a different size, the frame (5) is stopped after the lapse of a predetermined delay stopping time after the position detector (7) detects the reference position. The predetermined delay stopping time is set by a timer not shown in the drawings.

Subsequently, the arms (4) are moved towards the sidewalls whilst measuring the distance to the sidewall surfaces and then are stopped when the arms reach a predetermined position.

As described above, the sensor (3) is automatically set at the most suitable detection positions which are predetermined in accordance with the tyre size.

Specifically, a most suitable detection position is one at which irregularities have been seen from experience and the statistics which it is known are liable to occur in radial directions in a sidewall surface of each size tyre due to the construction of tyre. Consequently, the sensor (3) is set at a position suitable for detecting these irregularities.

Two or more sensors (3) are provided in the radial direction to one sidewall surface of the tyre so as to make it easy to discriminate irregularities required to detect running in radial directions from irregularities unrequired to detect. Also, for the sensor (3) an optical displacement sensor is used having a small spot diameter, for example, a diameter of 1.0mm or smaller. It should be noted that the term spot diameter means the diameter of the area which can be detected by the sensor at the same time. Also, it should be noted that the sport diameter of the sensor (3) used is smaller than the width of the letter element having the smallest used width.

By contrast if a sensor having a spot diameter exceeding 1.0mm is used a detection value is obtained in terms of an average amount in the detection area. Accordingly, it can be seen from Figures 6 and 7 that a difference between an irregularity required to detect and an irregularity unrequired to detect is then unclear and miss-inspection is consequently liable to result.

Accordingly, it should be understood that this invention in which irregularities on the sidewall surfaces detected by the use of plurality of sensors each having a small spot diameter with the sensors taking over their respective portions of a detection zone at the same time provides a considerably higher accuracy then inspections in which irregularities are detected in a large area by use of one sensor having a large spot diameter because the former obtains a clear detection of irregularities.

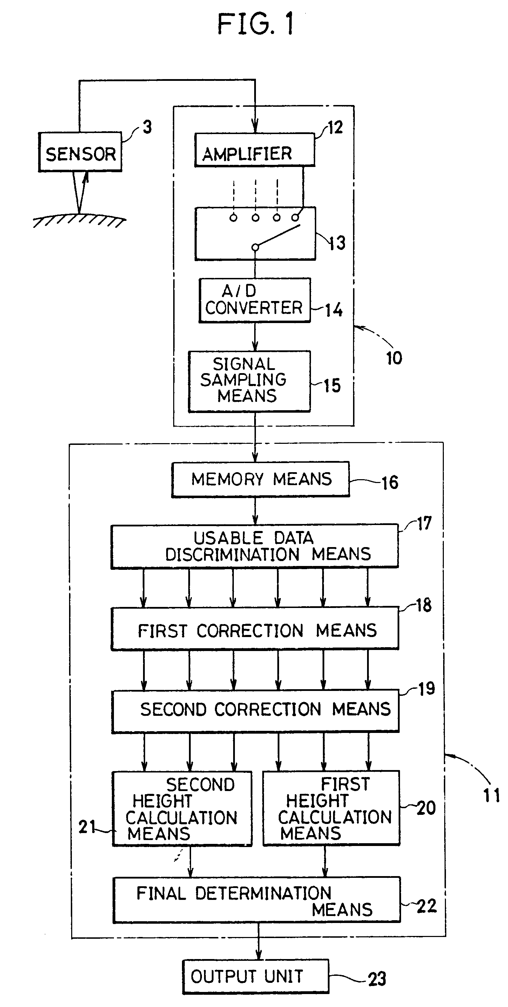

As shown in Figure 1 output signals of the sensors (3) are sent to a data processor unit (11) including a microcomputer, through an input unit (10) set at a predetermined detection pitch.

The input unit (10) includes an amplifier (12) to increase the output signal of each of the sensors (3), a multiplexer (13) for switching the output signals of the plurality of sensors (3) at a time considerably shorter than a sampling interval, an A/D converter (14) for converting the analog signal into the digital signal at such a short time as the multiplexer (13) and signal sampling means (15) having an encoder, a pulse generator and the like.

The signals sampling means (15) samples the conditions circumferential output signal of the sensor (3) in such an interval that detection areas do not overlap one another in the circumferential direction of the tyre. Also, the sensor (3) has a spot diameter of 1mm or small as mentioned above. consequently, irregularities can be detected at a high accuracy.

The data processor unit (11) includes memory means (16) for storing samples signals, e.g. a RAM memory, data discrimination means (17) for discriminating whether or not data read out from the memory means (16) are those concerning irregularities on the sidewall surface, first and second corrections means (18,19) for removing irregularities unrequired to detect from the data discriminated as usable data by the data discrimination means (17), first height calculation means (20) for finding out an irregularity falling within a predetermined condition in the corrected data concerning irregularities on the supper sidewall surface and calculating the height of the irregularity, second height calculation means (21) for finding out an irregularity falling within a predetermined condition in the corrected data concerning irregularities on the lower sidewall surface and calculating the height of the irregularity, and final determination means (22) for determining, based on the calculated heights of the irregularities, whether there is an abnormal irregularity.

Below will be described each of these means in detail.

(I) Data Discrimination Means (17)

When normal detection is not carried out, for example, a lens of the sensor (3), the tyre sidewall surface is greatly soiled, or the sensor (3) is not set at a suitable position the output of the sensor (3) comes to a high value exceeding the measurable range. When the data read out from the memory means (16a) includes a predetermined number or more of such abnormal data, the data discrimination means (17) judges that the data is not usable and then suspends the following operations. Data which are discriminated to be usable are sent to the first and second correction means (18,19) in which the data are than corrected.

(II) First Correction Means (18)

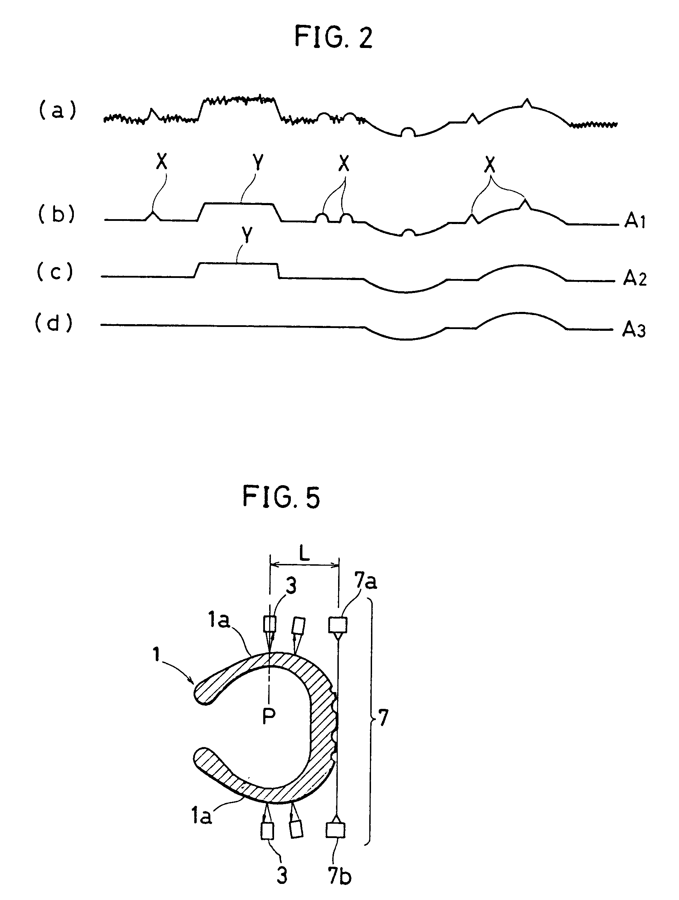

The raw data sent from the data discrimination means (17) are in the form of waveforms having a number of fine irregularities as shown in Figure 2(a). Such fine irregularities cause the efficiency of the following operations to be lowered and so the first correction means (18) corrects the raw data to give a basic waveform such as is shown in Figure 2(b) by checking the raw data over an entire circumference to find a portion having a predetermined number or more of fine irregularities having a width smaller than a predetermined width, smoothing the fine irregularities.

However, the basic waveform of Figure 2(b) includes small irregularities X caused by spews, peak marks, small lettering, lettering consisting of line like thin projections or hollow type lettering, or dirt which can not be checked by the data discrimination means (17).

The first correction means (18) eliminates such small irregularities. More specifically, the horizontal distance between a start point and an end point of each small irregularity i.e. the width of the small irregularity, is determined. Small irregularities whose width are smaller than a predetermined width are then eliminated as unnecessary irregularities. Consequently, the waveform as shown in Figure 2(c) is obtained.

(III) Second Correction Means (19)

It can be seen that a large irregularity Y having a larger width remains in the waveform of Figure 2(c). The large irregularity may be caused by solid type letterings or the like. The second correction means (19) removes such large irregularities. More specifically, the second correction means (19) finds out large irregularities having widths larger than a predetermined width and having a flat centre portion and then eliminates them. It should be noted that "flat centre portion" features include large letter.

Also, it should be noted that large irregularities having a "flat centre portion"includes not only those having a full straight flat centre portion but also those having a predetermined proportion of straight portion with respect to their full width.

Consequently, the waveform shown in Figure 2(d) is then obtained. It can be seen that the waveform of Figure 2(d) includes no irregularities unrequired to detect X, Y and includes only irregularities required to detect.

(IV) First and Second Height Calculation Means (20,21)

The first and second height calculation means (20,21) determine any irregularity falling within a predetermined condition, then calculate the height of that irregularity. Specifically, the waveform of Figure 2(d) which includes a gentle rise and fall caused by deflection of tyre and much finer irregularities not corrected by the correction means (18). Such gentle rises and falls and very fine irregularities are not required to be detected. Accordingly, the first and second height calculations means (20,21) neglect such irregularities having a considerably large width but retain the remaining irregularities as irregularities required to detect. Also, it should be noted that an irregularity having very small or fine irregularities is judged as an irregularity required to detect. Furthermore, it should be noted that an irregularity having a predetermined number of small discontinuities and a predetermined number of small reverse inclinations is judged as an irregularity required to detect.

Subsequently, the height of the irregularities falling within the above mentioned conditions are calculated.

It should be noted that even when detecting the same irregularity on the sidewall surface the positional difference of the sensors (3) differentiates the judgement of irregularities. Also, it should be noted that there is a difference between the data obtained by the sensor and equivalent data actually perceived by human beings. It is generally known that with respect to a projection from a surface, the height perceived by human beings is smaller than the true height, and with respect to a recessed surface, the depth perceived by human beings is greater than the true depth. Furthermore, it is known that such a gap in perceived dimensions is changed by the state of the surface surrounding the irregularity, for example, whether or not a knurled finish is there.

The judgement of irregularity in the invention is carried out based on a Determination Value which includes the above mentioned features.

An irregularity having a height greater than a predetermined height is determined to be abnormal. Evaluation of a portion in the radial direction of the tyre is effected by the following equation:

Evaluation Value = Maximum height + N x A + B

Wherein Maximum height means a height which is the maximum of the heights obtained by the plurality of sensors, N represents the number of sensors forwarded the evaluation of "abnormality" with respect to the portion in the radial direction of the tyre, A represents a factor for preventing an abnormal irregularity from being determined to be normal, and B represents a factor for executing a correction when a knurled finish or the like is provided.

The same calculation is carried out with respect to other radial portions. The evaluation value which is the highest of all the calculated evaluation values is taken as the total evaluation. The first and second height calculation means (20,21) separately send their respective total evaluation values to the final determination means (22).

(V) Final determination Means (22)

The final determination means (22) compares to one another the two total evaluation values sent from the first and second height calculation means (20,21) and then takes up the higher total evaluation value as the final data. The final data is ranked based on its value to determine whether a tyre having the final date is good or bad. For example, the final data is graded by four ranks A, B, C, and D. It is determined in advance that a tyre having a final data placed in rank D is bad, i.e. a defective tyre.

The results of the final determination is sent to an output unit (23) which then outputs a warning signal to provide an indication of a "defective tyre" by means of a warning device or the like.

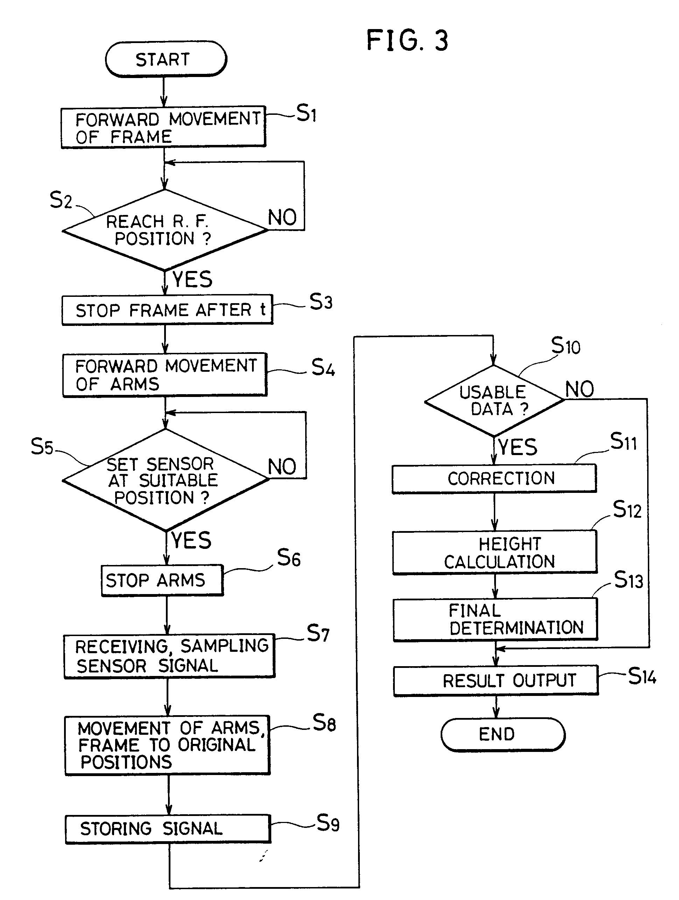

The above mentioned series of operations will now be described in more detail with reference to the flowchart shown in Figure 3.

At step S1, firstly, the frame 5 is moved forward towards the tyre. At step S2, the frame position is sensed based on the signals from the position detector (7) when the frame 5 reaches the reference position. In the case of one size of tyre, e.g. A size tyre, at step S3, the forward movement of the frame (5) is stopped after the lapse of a predetermined time of t second after reaching of the sensing or reference position.

In the case of another size of tyre e.g. B size tyre, at Step S3, the movement of the frame (5) is stopped immediately after the reaching of the reference position, that is the predetermined time t is zero. At step S4, the arms (4,4) are moved towards the sidewalls. At Step S5, it is checked based on the output of the sensor (3) when the sensor 3 is set at the most suitable detection position having a predetermined distance to the sidewall (1a). At Step S6, the movement of arms (4,4) is stopped immediately after the sensor (3) is set at the most suitable detection position. After the movement of the arms (4,4) is stopped the tyre is rotated and the receiving and picking up of signals from the sensors (3) occurs. After the receiving and picking up of the signals corresponding to an entire detection circumference of the tyre are completed, the arms (4,4) and the frame (5) are moved back to their respective original positions at Step S8.

At Step S9, the picked up signals are stored as detection data in the memory means (16) of the data processing unit (1). At Step S10, it is determined by the data discrimination means (17) whether the data read out from the memory means (16) are usable. When the data is found to be usable, the procedure advance to Step S11 at which the data is corrected by the first and second correction means (18,19). At step S12, the first and second height calculation means (20,21) find any irregularity falling within a predetermined condition and then calculate the heights of detection required irregularities. At Step S13, a final determination is made by the final determination means (22). At Step S14, finally, a final determination signal is sent from the output unit (23) to the warning device.

When the detection data is discriminated at Step 10 to be usable, for example, if the detection data includes data concerning dirt on the sidewall surface or the like, the procedure advances directly to Step S14 at which the output unit (23) issues a signal indicating that the data is unusable.

It is apparent that the series of operations, shown in Figure 3, may be controlled by one computer.

Also, it is apparent that the operations of setting the sensor at the suitable position and moving the frame and arms back to the original positions and the operations of processing data are respectively controlled by separate computers. In this separate computer system the operation of Step S8 and the operations after Step S9 can be executed at the same time, so that the time which is required for Step S8 in the single computer embodiment is eliminated. Consequently, inspection time is still further reduced.

As described above, according to the present invention, all the irregularities on a sidewall surface of a tyre are detected by the use of an optical sensor, and it is checked whether the detection data is unusable due to improper setting of the sensor or dirt on the tyre sidewall surface. Then the unusable data is corrected so as to remove irregularities unrequired to detect caused by large lettering, small lettering, or the like, an irregularity falling within a predetermined condition is found out in the corrected data, and the height of the irregularity is calculated, and a final determination as to whether there is an abnormal irregularity is then effected based on the calculated height of the irregularity.

Accordingly, it can be seen that the apparatus and method of the present invention assuredly eliminates the influence of letter, marks and the like and correctly detects irregularities required to detect, thus providing an increased inspection accuracy.

Also, the apparatus of the present invention in which each optical sensor is set at the most suitable detection position assures an easier setting of sensors and also provides further increased inspection accuracy.

Furthermore, since the apparatus of the present invention which has signal sampling means for sampling a signal of the sensor in such an interval that detection areas do not overlap one another in a circumferential direction of the tyre, irregularities can be detected at an increased accuracy.

Furthermore, the apparatus of the present invention in which a plurality of optical sensors facing the sidewall surface which are positioned in the radial direction of the tyre at an interval so as to take over their respective portions of a detection zone can attain greatly clear the detection of irregularities compared to an inspection system using one large sensor having a large detection area.

Furthermore, the apparatus of the present invention which has correction means for detecting the width of an irregularity and checking whether the irregularity has a flat centre portion so that irregularities unrequired to detect are removed from the data discriminated as usable data by the usable data discrimination means assures more accurate elimination of irregularities unrequired to detect.

## Claims

1. An apparatus for inspecting a sidewall of a tyre comprising a sensor (3) provided so as to face a sidewall surface (1a) of a rotatably mounted tyre to generate an irregularity signal, memory means (16) for storing the irregularity signal generated by the sensor (3), data discrimination means (17) for discriminating whether or not the signal read out from the memory means (16) is usable as irregularity inspection data, height calculation means (20) for determining an irregularity falling within a predetermined condition and calculating the height of the irregularity, and determination means (22) for determining, based on the height of the irregularity calculated by the height calculation means, whether there is an abnormal irregularity characterised in that the apparatus further comprises correction means (18,19) for removing irregularities which it is not required to detect from the data discriminated as usable data by the data discrimination means (17) and the sensor (3) is an optical sensor for reading a variation of distance to the sidewall surface (1a) as said irregularity signal.

2. An apparatus according to claim 1 characterised in that the optical sensor (3) is able to move to and away from the sidewall surface (1) and to be set at a most suitable detection position specified in advance in accordance with either the tyre category or the tyre size.

3. An apparatus according to claim 1 or 2 characterised in that the optical sensor (3) has a spot diameter of 1.00mm of smaller, and further comprises signal sampling means (15) for sampling a signal of the sensor in such an interval that detection areas to not overlap one another in the circumferential direction of the tyre.

4. An apparatus according to any one of claims 1 to 3 characterised by a plurality of optical sensors (3) facing the sidewall surface (1a) being provided in the radial direction of the tyre.

5. An apparatus according to any one of claims 1 to 4 characterised in that the correction means (18,19) checks the width of an irregularity as to whether the irregularity has a flat centre portion so that an irregularity unrequired to detect is removed from the data discriminated as usable data by the data discrimination means (17).

6. A method for inspecting a sidewall of a tyre comprising the steps of generating an irregularity signal, storing the irregularity signal in a memory means (16), discriminating whether or not the signal read out from the memory means (16) is usable as irregularity inspection data, determining which data relate to an irregularity falling within a predetermined condition, calculating the height of the irregularity, and determining, based on said height, whether this is an abnormal irregularity characterised in that the irregularity signal is generated by reading by an optical sensor a variation of the distance from the sensor to the sidewall surface (1a) and irregularities unrequired to detect are removed from the usable data before the step of determining which data relate to the irregularity falling within the predetermined condition.

7. A method according to claim 6 characterised by using a sensor (3) with less than 1mm diameter and sampling the signal at intervals around the tyre which do not overlap.

8. A method according to claim 6 or 7 characterised by, before determining the height of an irregularity, checking the width of the irregularity as to whether or not the irregularity has a flat centre portion so that an irregularity unrequired to detect is removed from the data discriminated as usable data.

## Patentansprüche

1. Vorrichtung zum Inspizieren einer Seitenwand eines Reifens, welche umfaßt einen Sensor (3), der so vorgesehen ist, daß er eine Seitenwandfläche (1a) eines drehbar angebrachten Reifens zur Erzeugung eines Unregelmäßigkeits-Signals flächig ansieht, Speichermittel (16) zum Speichern des von dem Sensor (3) erzeugten Unregelmäßigkeits-Signals, Datenunterscheidungsmittel (17), um zu unterscheiden, ob das aus dem Speichermittel (16) ausgelesene Signal als Unregelmäßigkeits-Inspektionsdaten verwendbar ist, Höhen-Errechnungsmittel (20) zum Bestimmen einer in einen vorbestimmten Zustand fallenden Unregelmäßigkeit und zum Errechnen der Höhe der Unregelmäßigkeit, und Bestimmungsmittel (22), um aufgrund der durch das Höhen-Errechnungsmittel errechneten Höhe der Unregelmäßigkeit zu bestimmen, ob eine abnormale Unregelmäßigkeit vorliegt, dadurch gekennzeichnet, daß die Vorrichtung weiter umfaßt Korrekturmittel (18, 19) zum Ausscheiden von Unregelmäßigkeiten, die zu erfassen nicht erforderlich ist aus den durch das Daten-Unterscheidungsmittel (17) als verwendbare Daten erkannten Daten und daß der Sensor (3) ein optischer Sensor zum Lesen einer Veränderung des Abstandes zu der Seitenwandfläche (1a) als das Unregelmäßigkeits-Signal ist.

2. Vorrichtung nach Anspruch 1, dadurch gekennzeichnet, daß der optische Sensor (3) fähig ist, sich zu der Seitenwandfläche (1) hin und von ihr weg zu bewegen und in eine bestgeeignete Erfassungslage gestellt zu werden, die vorher entsprechend entweder der Reifenkategorie oder der Reifengröße spezifiziert wurde.

3. Vorrichtung nach Anspruch 1 oder 2, dadurch gekennzeichnet, daß der optische Sensor (3) einen Fleckdurchmesser von 1,00 mm oder geringer besitzt und daß die Vorrichtung weiter Signalmittel (15) umfaßt zum Abtasten eines Signals des Sensors in einem solchen Intervall, daß die Erfassungsbereiche einander in der Umfangsrichtung des Reifens nicht überdecken.

4. Vorrichtung nach einem der Ansprüche 1 bis 3, dadurch gekennzeichnet, daß eine Vielzahl von die Seitenwandfläche (1a) flächig erfassenden Sensoren (3) in der Radialrichtung des Reifens vorgesehen sind.

5. Vorrichtung nach einem der Ansprüche 1 bis 4, dadurch gekennzeichnet, daß das Korrekturmittel (18,19) die Breite einer Unregelmäßigkeit prüft, ob die Unregelmäßigkeit einen ebenen Zentralabschnitt enthält, so daß eine Unregelmäßigkeit, deren Erfassung nicht erforderlich ist, aus den durch das Daten-Unterscheidungsmittel (17) als nutzbare Daten erkannten Daten entfernt wird.

6. Verfahren zum Inspizieren einer Seitenwand eines Reifens mit den Schritten, daß ein Unregelmäßigkeitssignal erzeugt wird, daß das Unregelmäßigkeitssignal in einem Speichermittel (16) gespeichert wird, daß unterschieden wird, ob das von dem Speichermittel (16) ausgelesene Signal als Unregelmäßigkeits-Inspektionsdaten benutzbar ist, daß bestimmt wird, welche Daten sich auf eine in einen vorbestimmten Zustand fallende Unregelmäßigkeit beziehen, daß die Höhe der Unregelmäßigkeit errechnet wird und aufgrund der Höhe bestimmt wird, ob es sich um eine abnormale Unregelmäßigkeit handelt, dadurch gekennzeichnet, daß das Unregelmäßigkeitssignal erzeugt wird durch belesen mit einem optischen Sensor einer Veränderung des Abstandes von dem Sensor zu der Seitenwandfläche (1a) und daß Unregelmäßigkeiten, die zu erfassen nicht erforderlich ist, aus den nutzbaren Daten entfernt werden, bevor bestimmt wird, welche Daten sich auf die in den vorbestimmten Zustand fallenden Unregelmäßigkeiten beziehen.

7. Verfahren nach Anspruch 6, dadurch gekennzeichnet, daß ein Sensor (3) mit weniger als 1 mm Durchmesser benutzt wird und das Signal mit Intervallen um den Reifen abgetastet wird, die einander nicht überdecken.

8. Verfahren nach Anspruch 6 oder 7, dadurch gekennzeichnet, daß bevor die Höhe einer Unregelmäßigkeit bestimmt wird, die Breite der Unregelmäßigkeit daraufhin überprüft wird, ob die Unregelmäßigkeit einen flachen Mittelabschnitt besitzt, so daß eine Unregelmäßigkeit, die zu erfassen nicht erforderlich ist, aus den als nutzbare Daten erkannten Daten entfernt wird.

## Revendications

1. Appareil d'inspection d'un flanc de pneumatique, comprenant un capteur (3) disposé afin qu'il soit tourné vers la surface du flanc (1a) d'un pneumatique monté afin qu'il puisse tourner, de manière qu'un signal d'irrégularité soit créé, une mémoire (16) destinée à conserver le signal d'irrégularité créé par le capteur (3), un dispositif (17) de discrimination de données destiné à déterminer si le signal lu dans la mémoire (16) peut être utilisé comme données d'inspection d'irrégularité ou non, un dispositif (20) de calcul de hauteur desti-

8

né à déterminer une irrégularité remplissant une condition prédéterminée et à calculer la hauteur de l'irrégularité, et un dispositif (22) de détermination, d'après la hauteur de l'irrégularité calculée par le dispositif de calcul de hauteur, du fait qu'il s'agit d'une irrégularité anormale, caractérisé en ce que l'appareil comporte en outre un dispositif de correction (18, 19) destiné à supprimer les irrégularités dont la détection n'est pas nécessaire des données déterminées comme utilisables par le dispositif de discrimination de données (17), et le capteur (3) est un capteur optique destiné à lire une variation de distance à la surface du flanc (1a) comme signal d'irrégularité.

2. Appareil selon la revendication 1, caractérisé en ce que le capteur optique (3) peut se rapprocher de la surface du flanc (1) et s'en écarter et peut être réglé à la meilleure position spécifiée préalablement en fonction de la nature ou de la taille du pneumatique.

3. Appareil selon la revendication 1 ou 2, caractérisé en ce que le capteur optique (3) a une tache de diamètre inférieur ou égal à 1,00 mm, et il comporte en outre un dispositif (15) d'échantillonnage d'un signal du capteur dans un intervalle tel que les zones de détection ne se recouvrent pas dans la direction circonférentielle du pneumatique.

4. Appareil selon l'une quelconque des revendications 1 à 3, caractérisé par plusieurs capteurs optiques (3) tournés vers la surface de flanc (1a) et disposés dans la direction radiale du pneumatique.

5. Appareil selon l'une quelconque des revendications 1 à 4, caractérisé en ce que le dispositif de correction (18, 19) vérifie la largeur d'une irrégularité pour déterminer si l'irrégularité a une partie centrale plate, si bien qu'une irrégularité qui ne doit pas être détectée est supprimée des données déterminées comme utilisables par le dispositif (17) de discrimination de données.

6. Procédé d'inspection d'un flanc de pneumatique, comprenant les étapes suivantes : la création d'un signal d'irrégularité, la mémorisation du signal d'irrégularité dans une mémoire (16), la discrimination du fait que le signal lu dans la mémoire (16) est utilisable comme données d'inspection d'irrégularité ou non, la détermination des données relatives à une irrégularité correspondant à une condition prédéterminée, le calcul de la hauteur de l'irrégularité, et la détermination, en fonction de la hauteur, du fait qu'il s'agit d'une irrégularité anormale, caractérisé en ce que le signal d'irrégularité est créé par lecture, par un capteur optique, d'une variation de la distance entre le capteur et la surface de flanc (1a) et les irrégularités dont la détection n'est pas nécessaire sont supprimées des données utilisables avant l'étape de détermination des données relatives à une irrégularité remplissant la condition prédéterminée.

7. Procédé selon la revendication 6, caractérisé par l'utilisation d'un capteur (3) de diamètre inférieur à 1 mm, et par l'échantillonnage du signal à des intervalles qui ne se recouvrent pas autour du pneumatique.

8. Procédé selon la revendication 6 ou 7, caractérisé, avant la détermination de la hauteur d'une irrégularité, par la vérification de la largeur de l'irrégularité pour la détermination du fait que l'irrégularité a une partie centrale plate ou non, si bien qu'une irrégularité dont la détection n'est pas nécessaire est supprimée des données déterminées comme données utilisables.

# FIG. 1

SENSOR ~3

AMPLIFIER ~12

~13

A/D CONVERTER ~14

SIGNAL SAMPLING MEANS ~15

10

MEMORY MEANS ~16

USABLE DATA DISCRIMINATION MEANS ~17

FIRST CORRECTION MEANS ~18

SECOND CORRECTION MEANS ~19

SECOND HEIGHT CALCULATION MEANS ~21

FIRST HEIGHT CALCULATION MEANS ~20

11

FINAL DETERMINATION MEANS ~22

OUTPUT UNIT ~23

10

# FIG. 2

(a)

(b)  ———  A₁

(c)  ———  A₂

(d)  ———  A₃

# FIG. 5

# FIG. 3

START

FORWARD MOVEMENT OF FRAME — S1

S2 — REACH R. F. POSITION ? — NO

YES

STOP FRAME AFTER t — S3

FORWARD MOVEMENT OF ARMS — S4

S5 — SET SENSOR AT SUITABLE POSITION ? — NO

YES

STOP ARMS — S6

RECEIVING, SAMPLING SENSOR SIGNAL — S7

MOVEMENT OF ARMS, FRAME TO ORIGINAL POSITIONS — S8

STORING SIGNAL — S9

USABLE DATA ? — S10 — NO

YES

CORRECTION — S11

HEIGHT CALCULATION — S12

FINAL DETERMINATION — S13

RESULT OUTPUT — S14

END

FIG. 4

CONTROL
UNIT

FIG. 6

( a )

( b )

( c )

FIG. 7

( a )

( b )

( c )